# FASCICULE DE BREVET EUROPEEN

(11) **EP 1 960 231 B1**
(45) Date de publication et mention de la délivrance du brevet: **10.04.2013**
(21) Numéro de dépôt: 06831108.3
(22) Date de dépôt: 13.11.2006
(51) Int. Cl.: B60R 9/06, B60R 11/06

(54) **DISPOSITIF DE FIXATION D'UN COFFRE LOGISTIQUE ET COFFRE LOGISTIQUE METTANT EN OEUVRE UN TEL DISPOSITIF**
VORRICHTUNG ZUR BEFESTIGUNG EINES LOGISTIKKASTENS UND SOLCH EINE VORRICHTUNG ENTHALTENDER LOGISTIKKASTEN
LOGISTICS BOX FIXING DEVICE AND LOGISTICS BOX INCLUDING ONE SUCH DEVICE

(30) Priorité: 21.11.2005 FR 0511744
(43) Date de publication de la demande: 27.08.2008
(73) Titulaire: NEXTER Systems, 42328 Roanne (FR)
(72) Inventeur: TIMMER, Bernard, F-78700 Conflans Saint-Honorine (FR); PATRY, Jean-Noël, F-78960 Voisins le Bretonneux (FR)
(74) Mandataire: Célanie, Christian
(86) Numéro de dépôt international: PCT/FR2006/002508
(87) Numéro de publication internationale: WO 2007/060308

(56) Documents cités:
- EP-A- 1 693 251
- EP-A1- 0 803 699
- DE-A1- 3 931 895
- DE-A1- 19 650 817
- FR-A- 2 715 218
- FR-A1- 2 465 988
- US-A1- 2001 048 011
- US-A1- 2005 061 841

## Description

Le domaine technique de l'invention est celui des coffres logistiques, et plus particulièrement celui des dispositifs permettant de fixer un tel coffre à une structure, par exemple à un véhicule militaire.

On connait le document EP-0803699 qui décrit un dispositif de fixation d'un caisson sur une structure.

Les coffres sont un accessoire classique permettant d'accroître les capacités d'emport d'un véhicule.

La plupart du temps ils ne peuvent être disposés à l'intérieur de celui-ci et doivent pouvoir être fixés à l'extérieur du véhicule d'une façon simple et fiable.

Les coffres doivent pouvoir être fixés à l'aide d'un dispositif assurant la fiabilité et la sécurité de la fixation.

Les coffres étant généralement des composants volumineux et lourds, le dispositif doit aussi permettre de faciliter les opérations de fixation ou démontage.

Par ailleurs il est souhaitable que le dispositif permette la fixation du coffre sur différents types de véhicules avec le minimum de modifications à apporter à la structure de ce dernier.

L'invention a pour but de proposer un dispositif permettant de faciliter la fixation d'un coffre logistique sur tous types de structures ou de véhicules.

L'invention propose également un coffre mettant en oeuvre un tel dispositif et pouvant être ainsi fixé facilement sur différents véhicules et suivant des orientations différentes.

Ainsi, l'invention a pour objet un dispositif de fixation d'un coffre logistique sur une structure, telle un véhicule, comportant des moyens assurant le positionnement du coffre par rapport à la structure et des moyens assurant le verrouillage du coffre sur la structure, les moyens de positionnement comprenant au moins une rampe de guidage solidaire de la structure et coopérant avec une barre solidaire du coffre, les moyens de positionnement comprenant au moins une surface d'appui solidaire de la structure et coopérant avec une surface du coffre, *caractérisé en ce que* les moyens de verrouillage comprenent au moins une grenouillère solidaire de la structure et coopérant avec un crochet solidaire du coffre, le coffre comportant sur au moins une de ses faces une réglette de positionnement et sur une autre face, contiguë à la précédente, au moins une patte de verrouillage, le coffre comportant sur une de ses faces ladite barre dont les extrémités s'étendent de part, et d'autre du coffre.

Avantageusement, le dispositif de fixation comportera un support de coffre qui est relié à la structure par un moyen d'attache, support comportant une embase sur laquelle sont fixées la ou les rampes de guidage ainsi que la ou les grenouillères.

Le moyen d'attache comporte un moyen de déverrouillage commandable à distance.

Le support pourra comporter un fût cylindrique qui se positionne sur un berceau de forme complémentaire et solidaire de la structure, le moyen d'attache comportant au moins une sangle souple entourant une partie du fût.

Suivant un mode de réalisation, les moyens de positionnement comprennent au moins une surface d'appui solidaire de la structure et coopérant avec une réglette solidaire du coffre.

Dans ce cas, les moyens de solidarisation pourront comprendre au moins une patte percée solidaire du coffre et coopérant avec une patte complémentaire solidaire de la structure.

Les moyens de solidarisation comprendront également une tige traversant la ou les pattes du coffre et la ou les pattes de la structure.

Le dispositif de fixation comportera alors une plaque solidaire de la structure, plaque portant au moins une patte de verrouillage et une lumière constituant la surface d'appui.

La plaque pourra également porter un plot destiné à recevoir un doigt de verrouillage coopérant avec un oeilleton solidaire de la réglette.

L'invention concerne également un coffre logistique l'une des revendications 10-12.

D'une façon préférée, ce coffre comportera une réglette de positionnement sur chacune des deux faces parallèles disposées de part et d'autre d'une porte donnant accès à l'intérieur du coffre.

Le coffre pourra comporter quatre pattes de verrouillage disposées sur une face perpendiculaire aux deux faces portant les réglettes.

D'autres avantages de l'invention apparaîtront à la lecture de la description qui va suivre d'un mode particulier de réalisation, description faite en référence aux dessins annexés et dans lesquels :
- la figure 1 montre un coffre en perspective trois quart avant et toutes portes fermées,
- la figure 2 montre ce même coffre en perspective trois quart arrière,
- La figure 3 montre deux de ces coffres fixés à une paroi à l'aide d'un premier mode de réalisation d'un dispositif selon l'invention,
- les figures 4a à 4c sont différentes vues en perspective des moyens d'accrochage portés par la paroi,
- les figures 5a et 5b montrent deux phases de la fixation d'un coffre à la partie arrière d'un véhicule blindé,
- les figures 6 à 8 sont des vues de détails des moyens d'accrochage du coffre,
- la figure 9 montre en vue latérale le coffre fixé à un l'arrière d'un véhicule blindé,
- la figure 10 montre un coffre fixé à une structure à l'aide d'un deuxième mode de réalisation d'un dispositif de fixation ne faisant pas partie de l'invention,
- la figure 11 montre la partie de ce dispositif qui est solidaire de la structure.

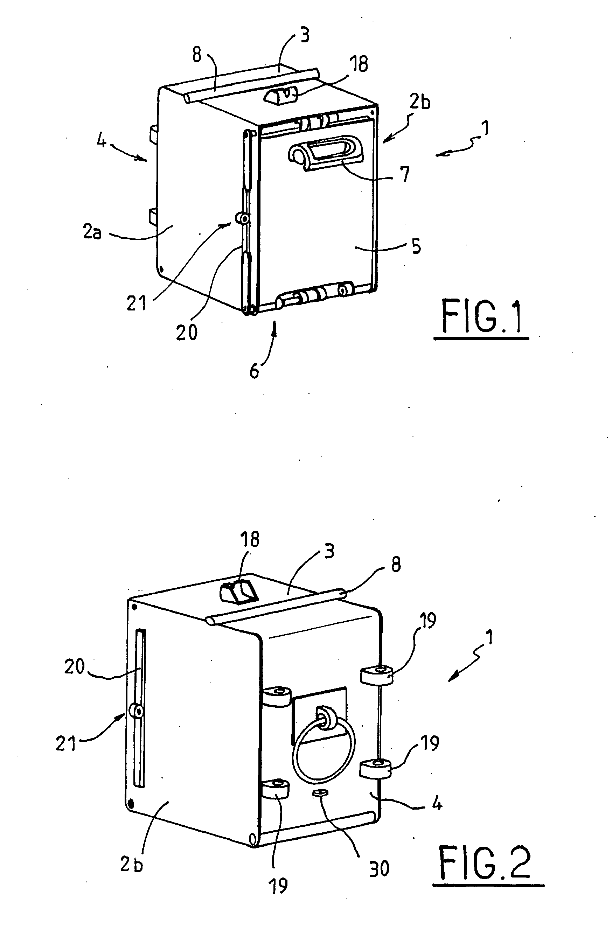

En se reportant à la figure 1, un coffre logistique 1 a une forme parallélépipédique et comporte donc six faces. Il comprend une ossature mécano soudée qui est formée par : les faces latérales 2a et 2b, la face supérieure 3 et la face arrière 4. Sur cette structure mécano soudée qui.forme le corps du coffre sont fixées ici deux portes pivotantes : une porte avant 5, dotée d'une poignée 7, et une porte inférieure 6.

Chaque porte constitue une face du parallélépipède. La porte avant 5 est parallèle à la face arrière 4, la porte inférieure 6 est parallèle à la face supérieure 3. Les portes sont donc disposées sur des faces contiguës et perpendiculaires l'une à l'autre.

Chaque porte est montée pivotante par rapport à une charnière. Ce coffre est représenté suivant une première orientation. Il est fixé à une structure telle une paroi de véhicule (non représentée) par un dispositif de fixation.

Suivant un premier mode de réalisation le dispositif comprend une barre transversale 8 qui est solidaire de la face supérieure 3 du coffre.

Cette barre est soudée à la face supérieure 3 et elle dépasse légèrement de part et d'autre du coffre au niveau des faces latérales 2a et 2b.

Elle est destinée à coopérer avec un moyen d'accrochage complémentaire solidaire de la structure du véhicule.

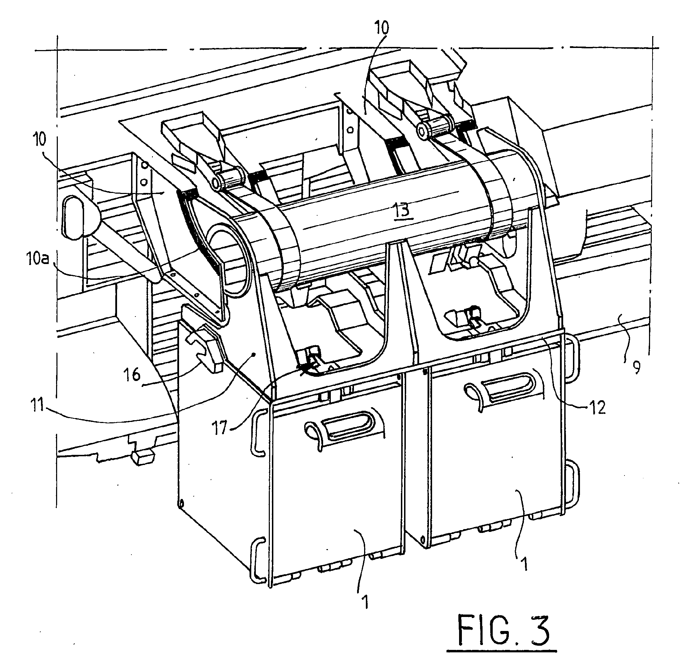

La figure 3 montre l'arrière d'un véhicule blindé 9. Ce dernier comporte une paire de berceaux 10 qui reçoit un support de coffre 11.

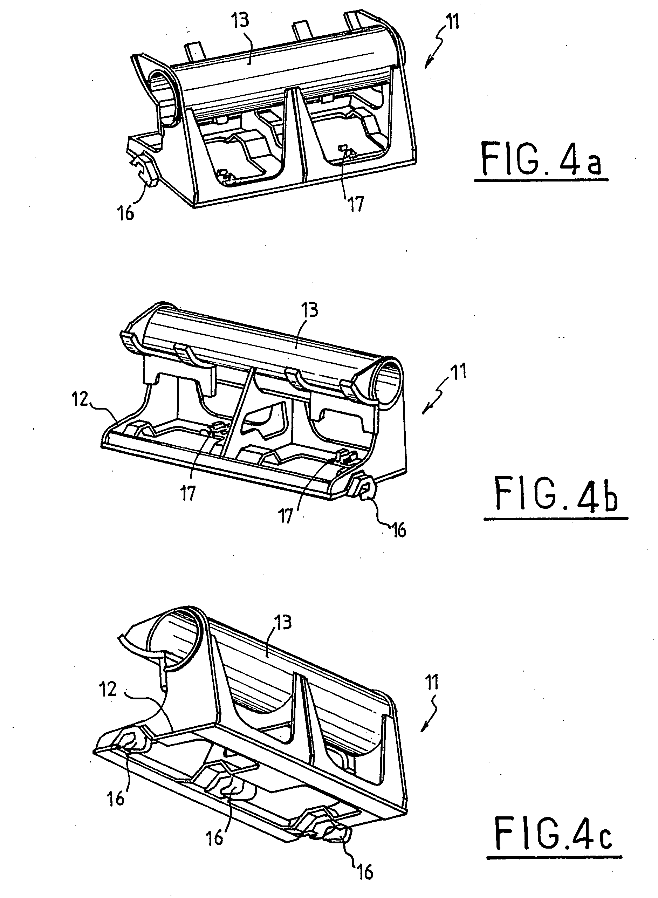

Ce support 11 comprend une embase 12 solidaire d'un fût cylindrique 13 qui se positionne sur les berceaux 10 (voir figures 4a à 4c).

Ces derniers ont une forme complémentaire de celle du fût 13. Une couche 10a d'un matériau amortisseur, par exemple de caoutchouc, pourra être fixée sur les berceaux et assurera un calage du fût 13 (voir figure 3).

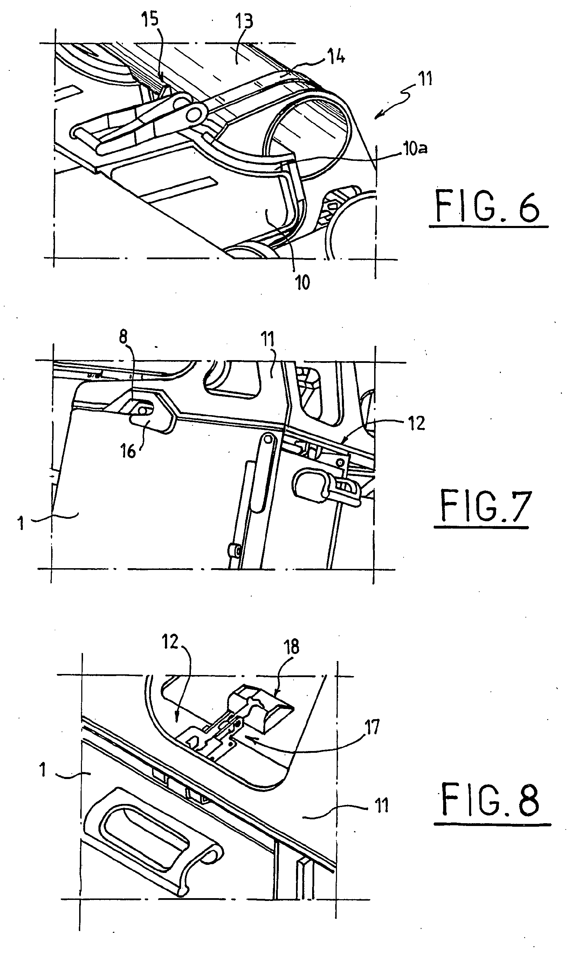

Le fût 13 est rendu solidaire du véhicule 9 par un moyen d'attache 14 qui comporte ici deux sangles souples dont les extrémités sont solidaires du véhicule et qui entourent une partie du fût. Les sangles comportent des tendeurs rotatifs à cliquet 15 d'un type classique et qu'il n'est pas nécessaire de décrire en détails (figure 6).

Comme cela est plus particulièrement visible sur la figure 4c, l'embase 12 porte trois rampes de guidage 16, une rampe médiane et deux rampes d'extrémité. La rampe médiane est plus large que les rampes d'extrémité.

Le support 11 est destiné à recevoir deux coffres 1. Les rampes 16 affectent la forme de crochets et elles reçoivent les extrémités des barres 8 solidaires des deux coffres 1.

Chaque barre 8 se positionne ainsi entre une rampe d'extrémité et la rampe médiane.

Les rampes constituent des moyens assurant le positionnement du coffre par rapport à la structure.

Par ailleurs l'embase 12 porte des moyens de verrouillage de chaque coffre qui comprennent deux grenouillères 17 solidaires de la paroi supérieure de l'embase 12 (voir figure 4b et 8). Chaque grenouillère 17 coopère avec un crochet 18 solidaire de la paroi supérieure 3 d'un coffre 1.

Les moyens de positionnement du coffre 1 comprennent également une surface d'appui qui est constituée par la face inférieure 12a de l'embase 12 qui vient en contact avec la paroi supérieure 3 du coffre 1.

Cette surface d'appui portera avantageusement une couche d'un matériau amortisseur (par exemple de caoutchouc).

Ainsi conformément à l'invention le dispositif de fixation comprend d'une part des moyens assurant le positionnement du coffre par rapport à la structure (les rampes 16 recevant la barre 8 et la surface d'appui 12a) et des moyens assurant le verrouillage du coffre sur la structure (les grenouillères 17).

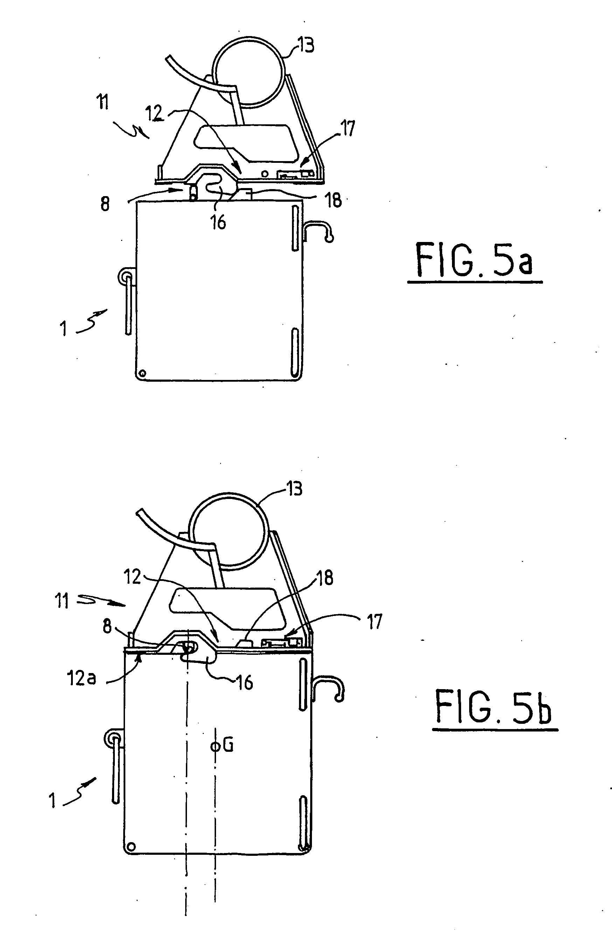

Une telle disposition permet de faciliter l'accrochage de coffres lourds ou volumineux. En effet pour fixer un coffre au véhicule on commence par positionner sa barre 8 sur les rampes 16 (voir figure 5a).

La face supérieure 3 du coffre vient alors en appui contre la face inférieure 12a de l'embase 12 (voir figure 5b). Le coffre se trouve ainsi positionné d'une façon fiable par rapport au support sans risque de chute. Le centre de gravité G du coffre se situe entre la barre 8 et la porte avant 5. Le basculement du coffre qui en résulte assure l'appui de celui ci sur la face 12a entre la barre et la face arrière 4 et empêche le glissement du coffre sur les rampes 16.

La fixation est ensuite assurée par la mise en oeuvre de la grenouillère 17.

Afin de permettre un largage rapide des coffres sur le terrain on pourra utiliser un moyen d'attache à sangle comportant un moyen de déverrouillage commandable à distance.

Un tel moyen mettant en oeuvre un électro aimant est connu par exemple du brevet FR2715218 et il n'est donc pas nécessaire de le décrire plus en détails.

A titre de variante on pourra recouvrir la face extérieure de la porte inférieure 6 par une couche d'un élastomère. Une telle variante permettra, lorsqu'on décroche le coffre 1 disposé en position verticale, de le protéger des effets dus au choc sur le sol.

Il est bien entendu possible de définir un support 11 ne recevant qu'un seul coffre 1.

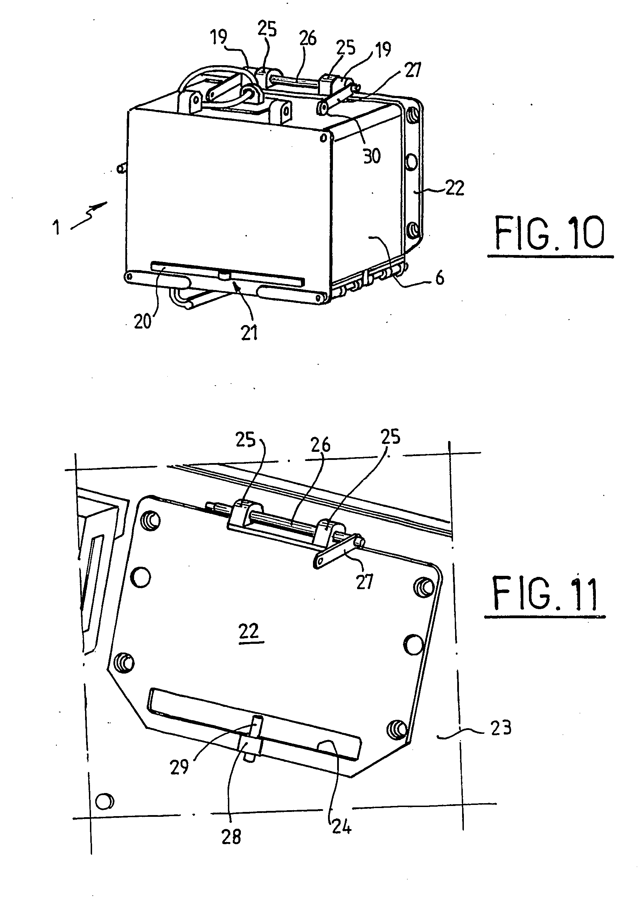

Les figures 10 et 11 montrent un autre mode de réalisation d'un dispositif de fixation ne faisant pas partie de l'invention.

Ce mode de fixation met en oeuvre des moyens qui sont également en partie solidaires du coffre 1 tel que représenté aux figures 1 et 2.

Le coffre 1 comprend ainsi au niveau de sa face arrière 4 quatre pattes 19 régulièrement réparties. Ces pattes sont percées et peuvent coopérer avec un moyen complémentaire solidaire de la structure du véhicule.

Par ailleurs les faces latérales 2a et 2b du coffre portent chacune une réglette soudée 20 portant un oeilleton 21.

La figure 11 montre la partie de ce dispositif de fixation qui est solidaire du véhicule. Cette partie comprend une plaque 22 rendue solidaire de la structure 23 par des vis.

La plaque 22 comporte à sa partie inférieure une lumière 24 sensiblement rectangulaire. Elle porte à sa partie supérieure deux pattes 25 dans lesquelles se positionne une tige 26 portant un levier 27.

La plaque 22 porte par ailleurs un plot 28 qui est positionné sensiblement au niveau du milieu de la lumière 24. Un doigt 29 amovible peut être positionné dans le plot 28.

Suivant ce mode de réalisation de l'invention, la lumière 24 constitue le moyen de positionnement du coffre. En effet la lumière forme une surface d'appui qui coopère avec une réglette 20.

Lors du montage du coffre 1 dans la position représentée à la figure 10 on positionne ainsi une réglette 20 au niveau de la lumière 24 (celle solidaire de la face 2a).

Une telle disposition permet de donner un appui au coffre ce qui facilite le montage. Lorsque le coffre est ainsi positionné, les pattes, 19 de sa face arrière 4 se positionnent de part et d'autre des pattes 25 de la plaque 22 (voir figure 10). On positionne alors la tige 26 au travers des trous des pattes 19 et 25 ce qui assure la solidarisation du coffre et de la plaque 22.

L'extrémité du levier 27 se positionne alors en regard d'une languette 30 percée et solidaire de la face arrière 4. Il est alors possible de mettre en place un moyen de verrouillage (tel un cadenas) permettant d'empêcher tout démontage du coffre 1.

Après mise en place de la tige 26 on positionnera le doigt 29 dans l'oeilleton 21 et le plot 28 ce qui complètera le verrouillage du coffre.

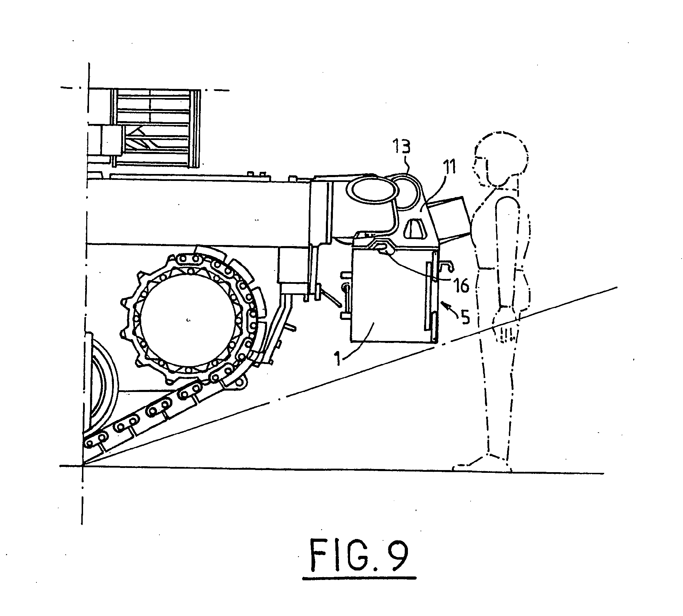

On remarque que sur la figure 9 le coffre est disposé suivant une orientation verticale dans laquelle c'est la porte 5 qui permet d'accéder au contenu du coffre 1.

Sur la figure 10 en revanche le coffre est disposé suivant une orientation horizontale dans laquelle c'est la porte 6 qui se trouve orientée vers la droite et permet d'accéder au contenu du coffre 1.

Par ailleurs en fonction des contraintes liées au véhicule il est possible de placer la porte 6 du côté droit ou bien du côté gauche. En effet les moyens d'accrochages sont symétriques, la face arrière 4 porte ainsi quatre pattes 19 identiques et chaque face latérale 2a, 2b porte une réglette 20.

Il est possible de ne mettre en oeuvre que l'un ou l'autre des dispositifs de fixation décrits précédemment. On s'arrangera alors pour que le coffre comporte une porte disposée d'une façon appropriée.

Il sera cependant avantageux de prévoir (comme décrit ici) un coffre portant au moins deux dispositifs de fixation différents. En effet une telle disposition permet d'accroître les possibilités d'intégration sur un véhicule. Dans ce cas il sera nécessaire de prévoir au moins deux portes afin que, quelle que soit l'orientation du coffre (horizontale ou verticale), il soit possible d'accéder à son contenu sans démontage.

Le coffre tel que décrit précédemment peut ainsi être positionné suivant trois orientations différentes, une orientation verticale et deux orientations horizontales.

L'invention a été ici décrite dans le cas de la fixation d'un coffre logistique sur une paroi de véhicule. Il est bien entendu que le dispositif de fixation selon l'invention peut être utilisé pour fixer tout type d'organe sur tout type de structure fixe ou mobile, terrestre, aérienne ou navale.

## Revendications

1. Dispositif de fixation d'un coffre logistique (1) sur une structure (9), telle un véhicule, comportant des moyens (16, 12a, 24) assurant le positionnement du coffre par rapport à la structure et des moyens (17, 25, 26) assurant le verrouillage du coffre sur la structure, les moyens de positionnement comprenant au moins une rampe de guidage (16) solidaire de la structure et coopérant avec une barre (8) solidaire du coffre (1), les moyens de positionnement comprenant au moins une surface d'appui (12a) solidaire de la structure et coopérant avec une surface du coffre (1), ***caractérisé en ce que*** les moyens de verrouillage comprenent au moins une grenouillère (17) solidaire de la structure et coopérant avec un crochet (18) solidaire du coffre (1), le coffre comportant sur au moins une de ses faces une réglette de positionnement (20) et sur une autre face, contiguë à la précédente, au moins une patte de verrouillage (19), le coffre comportant sur une de ses faces ladite barre (8) dont les extrémités s'étendent de part et d'autre du coffre (1)

2. Dispositif de fixation selon la revendication 1, **caractérisé en ce qu'**il comporte un support (11) de coffre (1) qui est relié à la structure (9) par un moyen d'attache (14), support (11) comportant une embase (12) sur laquelle sont fixées la ou les rampes de guidage (16) ainsi que la ou les grenouillères (17).

3. Dispositif de fixation selon la revendication 2, **caractérisé en ce que** le moyen d'attache (14) comporte un moyen de déverrouillage commandable à distance.

4. Dispositif de fixation selon une des revendications 2 ou 3, **caractérisé en ce que** le support (11) comporte un fût cylindrique (13) qui se positionne sur un berceau (10) de forme complémentaire et solidaire de la structure (9), le moyeu de verrouillage comportant au moins une sangle (14) souple entourant une partie du fût.

5. Dispositif de fixation selon la revendication 1, **caractérisé en ce que** les moyens de positionnement comprennent au moins une surface d'appui (24) solidaire de la
, la barre (8), le crochet (18), la réglette de positionnement (20) et la patte de verrouillage (19) font partie du dispositif. structure et coopérant avec la réglette (20) solidaire du coffre (1).

6. Dispositif de fixation selon la revendication 5, **caractérisé en ce que** les moyens de verrouillage comprennent au moins une patte (19) percée solidaire du coffre (1) et coopérant avec une patte complémentaire (25) solidaire de la structure (3).

7. Dispositif de fixation selon la revendication 6, **caractérisé en ce que** les moyens de verrouillage comprennent une tige (26) traversant la ou les pattes (19) du coffre (1) et la ou les pattes (25) de la structure (9).

8. Dispositif de fixation selon une des revendications 5 à 7, **caractérisé en ce qu'**il comporte une plaque (22) solidaire de la structure (23), plaque portant au moins une patte de verrouillage (25) et une lumière (24) constituant la surface d'appui.

9. Dispositif de fixation selon la revendication 8, **caractérisé en ce que** la plaque (22) porte un plot (28) destiné à recevoir un doigt de verrouillage (29) coopérant avec un oeilleton (21) solidaire de la réglette (20).

10. Coffre logistique (1) mis en oeuvre à l'aide d'un dispositif de fixation selon une des revendications précédentes, coffre (1) **caractérisé en ce qu'**il comporte sur au moins une de ses faces une réglette de positionnement (20) et sur une autre face, contiguë à la précédente, au moins une patte de verrouillage (19), le coffre (1) comportant sur une de ses faces au moins une barre (8) dont les extrémités s'étendent de part et d'autre du coffre (1), le coffre (1) comportant sur la face portant la barre (8) au moins un crochet (18) permettant le verrouillage d'une grenouillère (17).

11. Coffre logistique (1) selon la revendication 10, **caractérisé en ce qu'**il comporte une réglette de positionnement (20) sur chacune des deux faces (2a, 2b) parallèles disposées de part et d'autre d'une porte (5, 6) donnant accès à l'intérieur du coffre (1).

12. Coffre logistique (1) selon la revendication 11, **caractérisé en ce qu'**il comporte quatre pattes de verrouillage (19) disposées sur une face (4) perpendiculaire aux deux faces (2a, 2b) portant les réglettes (20).

## Claims

1. A device to fasten a logistic container (1) onto a structure (9), such as a vehicle, incorporating means (16, 12a, 24) to ensure the positioning of the container with respect to the structure and means (17, 25, 26) ensuring the locking of the container onto the structure, the positioning means comprising at least one guiding ramp (16) integral with the structure and cooperating with a bar (8) integral with the container (1), the positioning means comprising at least one bearing surface (12a) integral with the structure and cooperating with a surface on the container (1), **characterised in that** the locking means comprise at least one draw-pull fastener (17) integral with the structure and cooperating with a catch (18) integral with the container (1), the container comprising on at least one its faces a positioning strip (20) and on another face, contiguous with the previous one, at least one locking lug (19), the container comprising on one of its faces the said bar (B) the ends of which being extending on both sides of the container (1), the bar (8), the catch (18), the positioning strip (20) and the locking lug (19) are integral with the device.

2. A fastening device according to Claim 1, **characterised in that** it incorporates a support (11) for the container (1) which is linked to the structure (9) by attachment means (14), such support (11) incorporating a base (12) onto which the guiding ramp or ramps (16) will be attached as well as the draw-pull fastener or fasteners (17).

3. A fastening device according to Claim 2, **characterised in that** the attachment means (14) incorporate remotely-controlled unlocking means.

4. A fastening device according to one of Claims 2 or 3, **characterised in that** the support (11) incorporates a cylindrical barrel (13) which is positioned on a cradle (10) of matching shape and integral with the structure (9), the locking means incorporating at least one flexible strap (14) encircling part of the barrel.

5. A fastening device according to Claim 1, **characterised in that** the positioning means comprise at least one bearing surface (24) integral with the structure and cooperating with the strip (20) integral with the container (1).

6. A fastening device according to Claim 5, **characterised in that** the locking means comprise at least one pierced lug (19) integral with the container (1) and cooperating with a matching lug (25) integral with the structure (1).

7. A fastening device according to Claim 6, **characterised in that** the locking means comprise a rod (26) passing through the lug or lugs (19) of the container (1) and the lug or lugs (25) of the structure (9).

8. A fastening device according to one of Claims 5 to 7, **characterised in that** it incorporates a plate (22) integral with the structure (23), such plate incorporating at least one lock lug (25) and a slot (24) constituting the bearing surface.

9. A fastening device according to Claim 8, **characterised in that** the plate (22) carries a mounting (28) intended to receive a locking finger (29) cooperating with an eye (21) integral with the metal strip (20).

10. A logistic container (1) implementing a fastening device according to one of the above Claims, such container (1) **characterised in that** it incorporates on at least one of its faces a positioning metal strip (20) and on another face, contiguous with the previous one, at least one locking lug (19), the container (1) incorporates on one of its faces at least one bar (8) which ends extending on either side of the container (1), the container incorporating on the face carrying the bar (8) at least one clasp (18) enabling the locking of a draw-pull fastener (17).

11. A logistic container (1) according to Claim 10, **characterised in that** it incorporates a positioning metal strip (20) on each two parallel faces (2a, 2b) arranged on either side of a flap (5, 6) giving access to the inside of the container.

12. A logistic container according to Claim 11 **characterised in that** it incorporates four locking lugs (19) arranged on a face (4) that is perpendicular to the two faces (2a, 2b) carrying the metal strips (20).

## Patentansprüche

1. Vorrichtung zur Befestigung eines logistischen Kastens (1) an einer Struktur (9), wie einem Fahrzeug, aufweisend Mittel (16, 12a, 24), welche die Positionierung des Kastens in Bezug auf die Struktur gewährleisten, und Mittel (17, 25, 26), welche die Verriegelung des Kastens an der Struktur gewährleisten, wobei die Mittel zur Positionierung wenigstens eine Führungsrampe (16) umfassen, welche fest mit der Struktur verbunden ist und mit einer fest mit dem Kasten (1) verbundenen Stange (8) zusammenwirkt, wobei die Mittel zur Positionierung wenigstens eine Anschlagfläche (12a) umfassen, welche fest mit der Struktur verbunden ist und mit einer Fläche des Kastens (1) zusammenwirkt, *dadurch gekenntzeichnet, dass* die Verriegelungsmittel wenigstens eine Verschlussschnalle (17) umfassen, welche fest mit der Struktur verbunden ist und mit einem fest mit dem Kasten (1) verbundenen Haken (18) zusammenwirkt, wobei der Kasten an wenigstens einer seiner Flächen eine Trägerleiste zur Positionierung (20) und an einer anderen Fläche, welche an die Vorhergehende angrenzend ist, wenigstens eine Verriegelungslasche (19) aufweist, wobei der Kasten an einer seiner Flächen die genannte Stange (8) aufweist, deren Enden sich beiderseits des Kastens (1) erstrecken, wobei die Stange (8), der Haken (18), die Trägerleiste zur Positionierung (20) und die Verriegelungslasche (19) Teil der Vorrichtung bilden.

2. Befestigungsvorrichtung nach Anspruch 1, **dadurch gekennzeichnet, dass** sie einen Halter (11) des Kastens (1) aufweist, welcher durch ein Befestigungsmittel (14) mit der Struktur (9) verbunden ist, wobei der Halter (11) ein Unterteil (12) aufweist, an welchem die Führungsrampe oder Führungsrampen (16) sowie die Verschlussschnalle oder Verschlussschnallen (17) befestigt sind.

3. Befestigungsvorrichtung nach Anspruch 2, **dadurch gekennzeichnet, dass** das Befestigungsmittel (14) ein Entriegelungsmittel aufweist, welches auf Entfernung betätigbar ist.

4. Befestigungsvorrichtung nach einem der Ansprüche 2 oder 3, **dadurch gekennzeichnet, dass** der Halter (11) einen zylindrischen Schaft (13) aufweist, welcher an einem Gestell (10) angeordnet ist, welches eine komplementäre Form besitzt und fest mit der Struktur (9) verbunden ist, wobei das Mittel zur Verriegelung wenigstens ein elastisches Band (14) aufweist, welches einen Teil des Schafts umgibt.

5. Befestigungsvorrichtung nach Anspruch 1, **dadurch gekennzeichnet, dass** die Mittel zur Positionierung wenigstens eine Anschlagfläche (24) umfassen, welche fest mit der Struktur verbunden ist und mit der fest mit dem Kasten (1) verbundenen Trägerleiste (20) zusammenwirkt.

6. Befestigungsvorrichtung nach Anspruch 5, **dadurch gekennzeichnet, dass** die Verriegelungsmittel wenigstens eine durchbohrte Lasche (19) umfassen, welche fest mit dem Kasten (1) verbunden ist und mit einer komplementären, fest mit der Struktur (9) verbunden Lasche (25) zusammenwirkt.

7. Befestigungsvorrichtung nach Anspruch 6, **dadurch gekennzeichnet, dass** die Verriegelungsmittel einen Stift (26) umfassen, welcher die Lasche oder die Laschen (19) des Kastens (1) und die Lasche oder die Laschen (25) der Struktur (9) durchdringt.

8. Befestigungsvorrichtung nach einem der Ansprüche 5 bis 7, **dadurch gekennzeichnet, dass** sie eine fest mit der Struktur (23) verbundene Platte (22) aufweist, wobei die Platte wenigstens eine Verriegelungslasche (25) und ein Langloch (24) trägt, welches die Anschlagfläche bildet.

9. Befestigungsvorrichtung nach Anspruch 8, **dadurch gekennzeichnet, dass** die Platte (22) eine Buchse (28) trägt, welche dafür vorgesehen ist, einen Verriegelungsfinger (29) aufzunehmen, welcher mit einem fest mit der Trägerleiste (20) verbundenen Auge (21) zusammenwirkt.

10. Logistischer Kasten (1), welcher mit Hilfe einer Befestigungsvorrichtung nach einem der vorhergehenden Ansprüche eingesetzt wird, wobei der Kasten (1) **dadurch gekennzeichnet ist, dass** er an wenigstens einer seiner Flächen eine Trägerleiste zur Positionierung (20) und an einer anderen Fläche, welche an die Vorhergehende angrenzend ist, wenigstens eine Verriegelungslasche (19) aufweist, wobei der Kasten (1) an einer seiner Flächen wenigstens eine Stange (8) aufweist, deren Enden sich beiderseits des Kastens (1) erstrecken, wobei der Kasten (1) an der Fläche, welche die Stange (8) trägt, wenigstens einen Haken (18) aufweist, welcher die Verriegelung einer Verschlussschnalle (17) ermöglicht.

11. Logistischer Kasten (1) nach Anspruch 10, **dadurch gekennzeichnet, dass** er an jeweils den beiden Flachen (2a, 2b), die parallel beiderseits einer Tür (5, 6), welche Zugang in das Innere des Kastens (1) gewährt, angeordnet sind, eine Trägerleiste zur Positionierung (20) aufweist.

12. Logistischer Kasten (1) nach Anspruch 11, **dadurch gekennzeichnet, dass** er vier Verriegelungslaschen (19) aufweist, welche an einer Fläche (4) angeordnet sind, die senkrecht zu den beiden Flächen (2a, 2b) steht, welche die Trägerleisten (20) tragen.
